# FASCICULE DE BREVET EUROPEEN

(11) **EP 2 603 839 B1**
(45) Date de publication et mention de la délivrance du brevet: **16.09.2015**
(21) Numéro de dépôt: 11735453.0
(22) Date de dépôt: 25.07.2011
(51) Int. Cl.: G05B 11/32, G05B 13/02

(54) **TRAITEMENT A NIVEAUX MULTIPLES POUR OPTIMISER UNE OU PLUSIEURS UNITES DE SEPARATION DE FLUIDES**
MEHRSTUFIGE BEHANDLUNG ZUR OPTIMIERUNG EINER ODER MEHRERER FLÜSSIGKEITSABSCHEIDUNGSEINHEITEN
MULTIPLE-LEVEL TREATMENT FOR OPTIMIZING ONE OR MORE FLUID SEPARATION UNITS

(30) Priorité: 10.08.2010 FR 1056530
(43) Date de publication de la demande: 19.06.2013
(73) Titulaire: L'Air Liquide Société Anonyme pour l'Etude et l'Exploitation des Procédés Georges Claude, 75007 Paris (FR)
(72) Inventeur: ROBA, Thierry, I-25080 Raffa di Puegnago (BS) (IT); GUILLET, Gaétan, B-4910 La Reid (BE); KONTOPOULOS, Athanasios, J., F-77150 Lesigny (FR)
(74) Mandataire: Mercey, Fiona Susan
(86) Numéro de dépôt international: PCT/EP2011/062762
(87) Numéro de publication internationale: WO 2012/019905

(56) Documents cités:
- US-B2- 7 092 893

## Description

La présente invention concerne le traitement de données de paramètres issus d'au moins une unité de production de fluides, notamment mais non exclusivement dans le domaine de la production de gaz de l'air. D'autres applications peuvent être prévues, comme par exemple la production et la séparation d'hydrogène et de monoxyde de carbone, et plus généralement toute opération (ou ensemble d'opérations) d'unité de production (au sens du vocable anglais « *unit operations* ») avec des objectifs d'optimisation et de contraintes multiples dans la séparation d'au moins deux fluides initialement mélangés, ou plus généralement encore dans la co-production de fluides.

Dans ce qui suit, le principe d'une unité de séparation de fluides, tels que les gaz de l'air, n'est pas décrit en détail, s'agissant d'un principe largement décrit dans la littérature.

On indique simplement ici que ce procédé, par exemple pour la séparation des constituants de l'air, est utilisé pour produire de l'oxygène, de l'azote et de l'argon (plus rarement du Krypton et du Xénon) :
- sous forme gazeuse, ou
- sous forme liquide.

Les gaz produits (par exemple l'oxygène et l'azote) sont généralement comprimés à différents niveaux de pressions et envoyés vers un ou plusieurs points de consommation finale. Ces points peuvent être locaux ou distants. Dans le cas de points de consommation distants, les fluides transitent dans un réseau de distribution (via des canalisations par exemple).

Les produits liquides (par exemple l'oxygène, l'azote, l'argon, le krypton ou le xénon) sont quant à eux stockés dans des réservoirs cryogéniques puis transportés par camions ou wagons vers les points de consommation finale.

La difficulté dans la gestion d'une telle unité vient notamment du fait que toutes les productions de ces fluides sont liées entre elles et l'augmentation en quantité d'un ou plusieurs produits conduit inévitablement :
- à la diminution d'un ou plusieurs autres produits, s'il s'agit par exemple d'une considération de phase gazeuse relativement à une phase liquide d'une même espèce,
- ou à leur augmentation, s'il s'agit par exemple d'une considération d'une espèce par rapport aux autres (par exemple l'oxygène par rapport à l'azote, l'argon, le krypton ou le xénon).

De plus, les moyens utilisés pour la compression ou la liquéfaction, sur un site de production (pouvant comprendre plusieurs unités de production), sont multiples. Il convient donc d'optimiser l'utilisation de ces moyens pour, à la fois, satisfaire les contraintes de production et minimiser l'énergie consommée pour la production. En effet, à titre indicatif, 60% des coûts de production des gaz de l'air sont généralement liés à la consommation en particulier d'électricité.

Le choix des paramètres de fonctionnement (charge en air, production liquide, choix des moyens de compression, et autres) est généralement confié à des opérateurs (personnes physiques). Dans certains cas, des systèmes automatiques conduisent l'unité (ou l'ensemble d'unités) de production en utilisant des outils de contrôle avancés qui prennent en charge typiquement la gestion d'un état transitoire d'un premier point A de fonctionnement d'unité vers un deuxième point B de fonctionnement.

On connaît différents types d'outils de contrôle pour gérer les variations de charges de production d'une unité de production. Ces outils sont généralement à contrôle prédictif de type :
- à contrôle prédictif multi-variables ou « MVPC » ci-après (pour « Multi Variable Prédictive Control »),
- ou encore par exemple à stratégie de contrôle prédictif avancée ou « AFF » (pour "Advanced feed-forward").

Les outils du premier type MVPC permettent en général d'atteindre un degré élevé d'optimisation car ils peuvent conduire le système à un point proche de ses limites (propriété dite de « constraint pushing »). Il peut être associé à ce type de technique un optimiseur, le plus souvent linéaire.

L'une des principales lacunes à pallier généralement, pour ces types d'outil, est une intégration du problème d'optimisation (qui répond à la question : « où aller ? ») et du problème de contrôle (qui répond à la question : « comment y aller ? »). Cette intégration peut provoquer certaines oscillations inutiles par le retour de réponse (« feedback »), en particulier dans une phase transitoire.

Par ailleurs, ce type de contrôle présente une difficulté, voire une impossibilité, d'utiliser des variables logiques (arrêt ou démarrage d'équipements par exemple).

Ce type de contrôle ne tient compte d'aucune notion temporelle au niveau des objectifs de productions, mais définit simplement des consignes à atteindre le plus rapidement possible (« setpoint »).

Seules les contraintes ayant une relation linéaire (ou pseudo-linéaire) avec un ou plusieurs degrés de liberté (définis par des variables de commande) peuvent être gérées convenablement. Par exemple, la mise à l'air d'un produit (par différence entre consommation et production instantanée) est difficilement contrôlable par ce type de système car le gain (au sens dynamique) s'annule subitement lorsque la vanne correspondante se ferme.

Un tel contrôle, même s'il est bien adapté pour effectuer des changements de charge (gestion de la dynamique de production), n'est pas véritablement apte à déterminer un point de fonctionnement optimisant l'utilisation de l'énergie du site.

Il a été proposé une adaptation de ce type d'optimiseur selon une forme statique permettant, par exemple, de gérer la production liquide d'unités connectées à un réseau (document US-A-7092893). Cet optimiseur définit des objectifs (« targets ») à un contrôleur de changement de charge (type MVPC). Il est prévu en particulier d'utiliser un intervalle de temps prédéfini (une période fixe, plus précisément) pour envoyer des objectifs au contrôleur.

Toutefois, une telle réalisation risque de provoquer des oscillations, ou encore des résultats non optimaux (typiquement une optimisation statique dans un procédé en état non stationnaire). Par ailleurs, le retour de réponse (ou « feedback »), dans ce type de configuration, peut difficilement être pris en compte, avec alors un risque de décalage entre le modèle et l'état réel de l'unité de production. En outre, il semblerait que ce type d'optimisation ne puisse être exécuté qu'avec une cadence très lente et fixe.

La présente invention vient améliorer la situation.

Elle propose à cet effet un procédé mis en oeuvre par des moyens informatiques, d'optimisation de la gestion d'une ou plusieurs unités de production d'au moins un fluide par co-production de fluides (notamment par traitement de séparation de fluides). Le procédé comporte :
a) une étape de collecte de données :
   o d'une ou plusieurs valeurs de paramètres courants définissant un point de fonctionnement courant de l'unité de production,
   o d'une demande de production future, et
   o d'au moins un critère d'optimisation,
b) et une étape de calcul d'un ou plusieurs paramètres définissant un nouveau point de fonctionnement de l'unité, au moins en fonction de ladite demande.

Au sens de l'invention, l'étape de calcul b) comporte en particulier :
b1) une estimation d'au moins une solution optimale pour la définition du nouveau point de fonctionnement, et
b2) un test de validité de cette solution optimale, au moins en fonction d'une analyse de transition de l'unité de production depuis le point de fonctionnement courant jusqu'au nouveau point de fonctionnement.

L'unité de production peut être un appareil de séparation d'air par distillation cryogénique ou un appareil de séparation d'un mélange de monoxyde de carbone et d'hydrogène par distillation cryogénique ou un appareil d'enrichissement en dioxyde de carbone d'un débit contenant du dioxyde de carbone par distillation..

Ainsi, l'invention permet une optimisation à deux niveaux : suite à une fixation d'objectifs optimaux sur un premier niveau, une optimisation du passage transitoire pour atteindre cet état est proposée à l'opération b2). L'invention propose alors une optimisation à deux niveaux en répondant aux deux questions :
- quel est l'objectif global à atteindre ? et
- comment atteindre cet objectif (ou quel « chemin » emprunter pour atteindre cet objectif) ?

Par exemple, si le nouveau point de fonctionnement déterminé à l'opération b1) est trop proche d'un point de fonctionnement courant de l'unité de production, l'atteinte de ce nouveau point de fonctionnement nécessitant toutefois une transition de fonctionnement sous-optimale (risquant par exemple de limiter momentanément la production ou encore de rendre instable l'unité pendant la transition), le changement de point de fonctionnement est une solution sous-optimale et cette solution est rejetée pendant l'opération b2).

Dans un autre exemple, le point de fonctionnement estimé à l'étape b) peut être situé dans une zone « interdite » de fonctionnement (pour des raisons de sécurité, de consommation d'énergie pour produire, ou autre). Une telle solution est alors filtrée pendant l'opération b2). Ainsi, le test de validité de l'opération b2) peut avantageusement être mené en outre selon au moins un critère basé sur des règles métier de fonctionnement d'équipements que comporte l'unité. Par exemple, il est généralement sous-optimal de mettre à l'arrêt un équipement trop rapidement après sa mise en service (tel qu'un compresseur par exemple). Il s'agit, là encore, d'une règle métier qui peut être prise en compte pour tester la validité de la solution présentée à l'opération b1).

Dans un autre exemple encore, un processus global de modification de fonctionnement de l'unité peut être en cours et il peut être sous-optimal de modifier le point de fonctionnement avant la fin de ce processus. Ainsi, le test de validité de l'opération b2) peut avantageusement être mené en outre selon au moins un critère basé sur une analyse d'un processus global de modification de fonctionnement de l'unité, en cours, avec une étude d'optimalité d'une modification du point de fonctionnement défini à l'étape b) en fonction de ce processus global.

Avantageusement, l'étape de collecte a) comporte en outre la collecte de données de contraintes à respecter pour le calcul du ou des paramètres définissant le nouveau point de fonctionnement, et l'estimation de la solution optimale tient alors compte de ces contraintes. Il peut s'agir alors ici de préciser certaines règles dont l'optimisation doit tenir compte, outre des règles métier habituelles, comme indiqué précédemment.

Avantageusement, le procédé comporte en outre un prétraitement des données collectées à l'étape a) pour simplifier une formulation de la demande à traiter pendant l'opération d'estimation b1).

Par exemple, ce prétraitement peut comporter notamment une planification d'une tâche à long terme, en sous-tâches successives à court terme. Cette tâche à long terme peut par exemple nécessiter le processus global de modification, précité. Ainsi, il apparaît une coopération possible entre le prétraitement précité et l'opération b2) de test de la solution optimale présentée. En effet, le prétraitement peut définir différents points successifs de fonctionnement pour atteindre un objectif global (selon donc une planification d'une tâche à long terme en une succession de sous-tâches à court terme), tandis que l'opération de test b2) peut consister finalement en un post-traitement d'optimisation assurant notamment que le point de fonctionnement présenté après optimisation (à l'étape b1)) est bien compatible avec le processus global de modification en cours.

Dans une telle réalisation, les étapes a) et b) peuvent être appliquées répétitivement, et la tâche à long terme est menée par itérations successives d'applications des étapes a) et b) pour effectuer progressivement chacune desdites sous-tâches à court terme. On comprendra alors qu'il s'agit d'un procédé itératif en boucle fermée pour atteindre par exemple une consigne cible à long terme, ces itérations étant menées quant à elles à court terme. En réalité, ce « court terme » est défini par la cadence d'admission de solutions valides à l'opération b2). Ainsi, le post-traitement précité fixe la cadence d'optimisation du fonctionnement de l'unité de production.

Bien entendu, le prétraitement précité peut permettre la simplification de la demande selon d'autres critères. Par exemple, cette simplification peut comporter en outre un lissage de valeurs de mesures issues de l'unité de production et/ou un cadrage de valeurs dans des intervalles prédéterminés. Des exemples plus précis seront détaillés plus loin.

Avantageusement, le procédé comporte en outre une opération b3) de mise en forme d'un jeu de consignes de commande de l'unité, ce jeu de consignes étant fonction de la solution optimale valide, retenue à l'issue de l'opération b2).

Dans ce contexte, on peut appliquer avantageusement un contrôle prédictif multi-variables (ou « MVPC », comme indiqué précédemment).

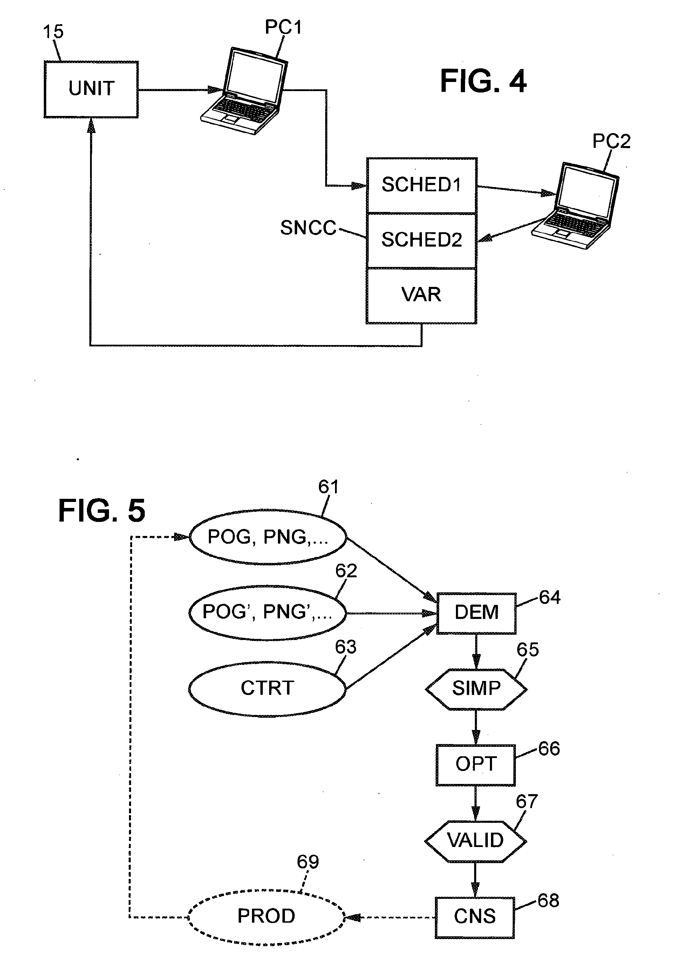

Le post-traitement et/ou le prétraitement et/ou l'optimisation elle-même peuvent être menés par des modules informatiques judicieusement programmés pour exécuter des instructions de tests et de prises de décision, comme on le verra plus loin dans la description détaillée ci-après, notamment en référence à la figure 5. Ainsi, l'invention peut être mise en oeuvre grâce à l'exécution d'un programme informatique pour le post-traitement et/ou le prétraitement et/ou l'optimisation.

A ce titre, la présente invention vise un tel programme informatique, comportant en particulier des instructions pour la mise en oeuvre du procédé ci-avant, lorsque ce programme est exécuté par un processeur.

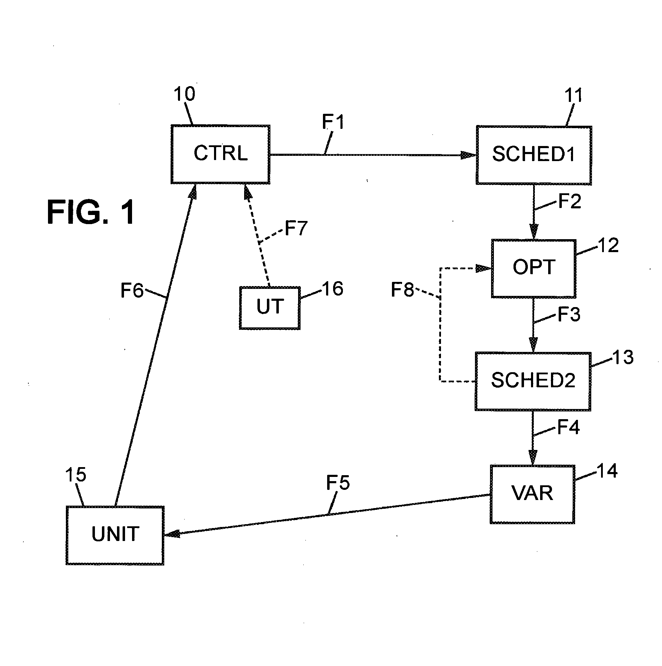

La présente invention vise aussi un dispositif comportant des moyens informatiques pour l'aide à l'optimisation de la gestion d'une ou plusieurs unités de production d'au moins un fluide par co-production de fluides, notamment par traitement de séparation de fluides. En particulier, un tel dispositif comporte au moins une interface de post-traitement pour la mise en oeuvre de l'opération b2) du procédé ci-avant. Une telle interface de post-traitement peut se présenter sous la forme d'un module informatique en aval d'un module d'optimisation, comme on le verra en référence à la figure 1 dans un exemple de réalisation décrit ci-après. - Un tel dispositif peut comporter en outre une interface de prétraitement pour une simplification de formulation de demande, comme indiqué précédemment.

Selon un objet de l'invention, il est prévu un appareil de séparation par distillation d'au moins un fluide par co-production de fluides dont la gestion est optimisée par le procédé d'une des revendications 1 à 11.

D'ailleurs, d'autres caractéristiques et avantages de l'invention apparaîtront à l'examen de la description détaillée ci-après, et des dessins annexés sur lesquels :
- la figure 1 illustre le principe général d'une optimisation à multiples niveaux au sens de l'invention ;
- la figure 2 illustre un écran d'interface utilisateur permettant de définir différents objectifs de production sur une semaine, dans l'exemple représenté ;
- la figure 3 représente les variations de charge prévues avec et sans l'interface de post-traitement 13 de la figure 1 (respectivement la courbe en traits pointillés et la courbe en trait plein) ;
- la figure 4 illustre schématiquement un exemple d'architecture matérielle possible des modules de la figure 1 ;
- la figure 5 illustre un organigramme représentant l'algorithme général possible d'un programme informatique au sens de l'invention, qui peut être distribué, dans un exemple de réalisation, auprès de plusieurs modules 10, 11, 12, 13 et 14 de la figure 1.

L'invention peut être mise en oeuvre dans le cadre d'une combinaison d'un contrôleur, par exemple, de type MVPC (pour « Multi-Variable Predictive Control »), avec un optimiseur (linéaire ou non), pour une gestion optimale de consignes de production.

Plus particulièrement, l'invention propose un dispositif combinant, mais tout en conservant une séparation de leur fonctionnement individuel :
- un module de contrôle avancé des procédés de production (par exemple de type MVPC), et
- un module d'optimisation (linéaire ou non) de ces procédés,
et la transmission d'information d'un module vers l'autre est gérée par au moins une interface de planification (ou« *scheduler* », en anglais).

Un tel planificateur a notamment pour but d'effectuer un post-traitement visant à accepter ou rejeter les solutions de l'optimiseur en amont, suivant l'état du procédé de production en cours et, ainsi, permettre un comportement stable du système de production. Le planificateur a aussi pour but de transmettre les objectifs validés au deuxième niveau, c'est-à-dire au module de contrôle avancé.

Avantageusement, on prévoit un autre planificateur, en amont de l'optimiseur, pour traduire et/ou transformer les contraintes du système de production, de manière à réduire au maximum le nombre de variables à traiter par l'optimiseur.

Ainsi, en référence à la figure 1 illustrant les différentes interactions entre ces éléments, un système au sens de l'invention peut comporter, dans un exemple de réalisation :
- une ou plusieurs unités de production 15, par séparation de fluides,
- un module de communication 10 récupérant des paramètres issus notamment des unités de production pour formuler de nouvelles demandes de production en fonction de ces paramètres et de contraintes prédéterminées, propres aux unités de production par exemple,
- une première interface de planification 11, de prétraitement, pour mettre en forme ces demandes notamment en les simplifiant,
- un module d'optimisation 12 pour traiter ces demandes simplifiées en définissant en particulier un nouveau point de fonctionnement B, partant d'un point de fonctionnement courant A,
- une deuxième interface de planification 13, de post-traitement, pour filtrer la ou les solutions décidées par le module d'optimisation et susceptible de corriger cette solution ou, dans un autre mode de réalisation possible, de solliciter le module d'optimisation pour déterminer un nouveau point de fonctionnement si la solution précédente ne convient pas par exemple à un état de fonctionnement en cours d'une unité de production,
- un module de contrôle 14, pour calculer des consignes afin d'atteindre le nouveau point de fonctionnement B validé par l'interface 13 de post-traitement,
- éventuellement, un poste 16 d'utilisateur pour préciser par exemple des contraintes ou des demandes au module de communication 10.

En fonctionnement, le module de communication 10 reçoit d'une ou plusieurs unités de production 15 (flèche F6) un état de la production en cours, sous forme de données par exemple :
- de la demande en oxygène gazeux,
- en azote gazeux,
- en oxygène liquide ou autres liquides,
- de la pression dans les canalisations,
- des limites des compresseurs,
- des limites en puissance consommée,
- ou autres.

Le module de communication 10 peut recevoir en outre (flèche F7 en traits pointillés) des consignes supplémentaires de points cibles et/ou de planification que demande un utilisateur physique depuis le poste 16.

L'ensemble de ces données sont alors communiquées (flèche F1) à l'interface de prétraitement 11 qui définit alors, en fonction de ces données collectées, des valeurs réelles de production, des contraintes et des valeurs cibles à atteindre en partant des valeurs réelles et en tenant compte de ces contraintes. L'interface 11 transmet ensuite les données de ces valeurs réelles, des valeurs cibles et des contraintes, au module d'optimisation 12 (flèche F2). Le module d'optimisation 12 a pour tâche de résoudre le problème consistant à atteindre les valeurs cibles précitées en définissant un nouveau point de fonctionnement B. Avantageusement ici, l'interface 11 simplifie la position de ce problème. Des exemples de simplification sont décrits ci-après. Ainsi, cette interface 11 peut agir en tant que filtre des données issues du module de communication 10 avant d'être présentées au module d'optimisation 12.

Le module d'optimisation 12 interprète les données filtrées par rapport à l'état actuel de l'unité de production 15 et détermine une solution optimale selon au moins un critère choisi. Des exemples de critères seront donnés ci-après.

Avantageusement, une deuxième interface de planification 13 filtre la solution, en post-traitement, que détermine le module d'optimisation 12 (flèche F3). Ainsi, par exemple, si le nouveau point de fonctionnement que détermine le module d'optimisation 12. est trop proche d'un point de fonctionnement courant, nécessitant toutefois une transition de fonctionnement sous-optimale (risquant par exemple de limiter momentanément la production ou encore de rendre instable l'unité 15 pendant la transition), le changement de point de fonctionnement est une solution sous-optimale. L'interface de post-traitement 13 joue alors le rôle de filtre pour rejeter cette solution. Dans un autre exemple simple, une autre modification de processus peut être en cours et il est sous-optimal de modifier le point de fonctionnement avant la fin de la modification complète du processus précité. Dans un autre exemple encore, le point de fonctionnement estimé par le module d'optimisation 12 peut être situé dans une zone « interdite » de fonctionnement (pour des raisons de sécurité, de consommation d'énergie pour produire, ou autre). L'interface de post-traitement 13 filtre cette solution. Dans un exemple de réalisation, l'interface 13 peut corriger directement la solution précitée ou, en variante, solliciter à nouveau le module d'optimisation 12 pour rechercher une nouvelle solution correspondant à un nouveau point de fonctionnement (flèche F8).

Les données relatives au nouveau point de fonctionnement B sont alors transmises (flèche F4) ensuite au module de contrôle 14 qui calcule des consignes de fonctionnement de l'unité 15 pour atteindre le point de fonctionnement B. Ce module de contrôle 14 peut implémenter par exemple une technique de type MVPC (pour « Multi-Variable Predictive Control ») pour définir un changement de variables de fonctionnement efficace. Finalement, ces consignes sont transmises aux organes de production de l'unité 15 (flèche F5).

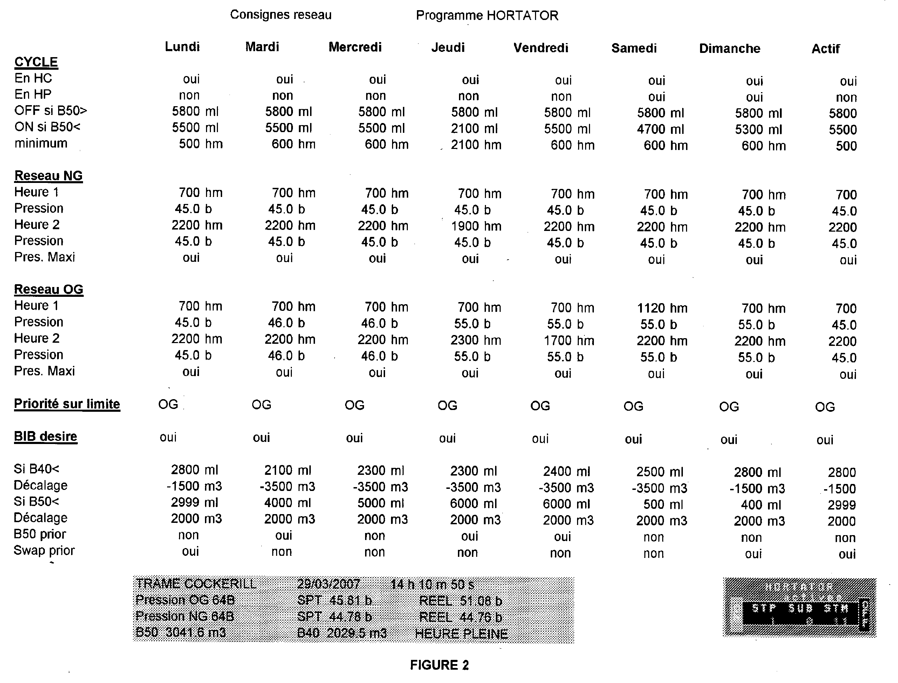

Dans une réalisation, la simplification d'une demande, mise en oeuvre par l'interface 11 de prétraitement, peut comporter par exemple une planification d'une tâche à long terme (par exemple sur 24 heures, comme on le verra plus loin en référence à la figure 2). A cet effet, l'interface de prétraitement peut découper par exemple cette tâche en une succession de sous-tâches que l'unité de production doit accomplir consécutivement pour remplir la tâche principale planifiée.

Par exemple, si une demande de pression de X bars est demandée sur une canalisation dans 24 heures, l'interface de prétraitement détermine, à partir d'une pression actuelle de X'₀ bars sur cette même canalisation (avec X'₀ inférieur à X par exemple), qu'une production doit être augmentée jusqu'à obtenir X'₁ bars sur cette canalisation (avec X'₀<X'₁<X) dans un premier temps, puis augmentée jusqu'à X'₂ bars dans un second temps (avec X'₀<X'₁<X'₂<X), et ainsi de suite.

Le module d'optimisation 12 détermine, dans un premier temps aussi, le nouveau point de fonctionnement de l'unité de production permettant d'atteindre les X'₁ bars dans la canalisation et l'interface de post-traitement 13 valide ou corrige cette solution, notamment en fonction de règles métier prédéterminées. Les consignes permettant d'atteindre ce nouveau point de fonctionnement sont formulées par le module 14, et l'unité 15 applique ces consignes.

Dans le second temps précité, en fonction de l'état actuel de production et notamment de la pression courante dans la canalisation, l'interface de prétraitement 11 sollicite le module d'optimisation 12 pour définir un nouveau point de fonctionnement permettant d'atteindre la pression de X'₂ bars. L'interface de post-traitement 13 valide ou corrige cette solution en fonction des règles métier précitées. Par exemple, si pour atteindre la pression précédente X'₁, il a été nécessaire de mettre en marche un équipement de l'unité de production (un compresseur ou autre), alors que l'atteinte des X'₂ bars signifie que cet équipement devrait être arrêté (par exemple selon un critère d'économie d'énergie consommée ou autre), l'interface de post-traitement 13 peut invalider la solution consistant à arrêter l'équipement car il serait sous-optimal de mettre en arrêt un équipement immédiatement après sa mise en marche. La solution que retiendra alors l'interface de post-traitement pourra alors consister en une temporisation avant l'arrêt de l'équipement (par exemple en attendant une nouvelle valeur cible de pression à atteindre X'₃).

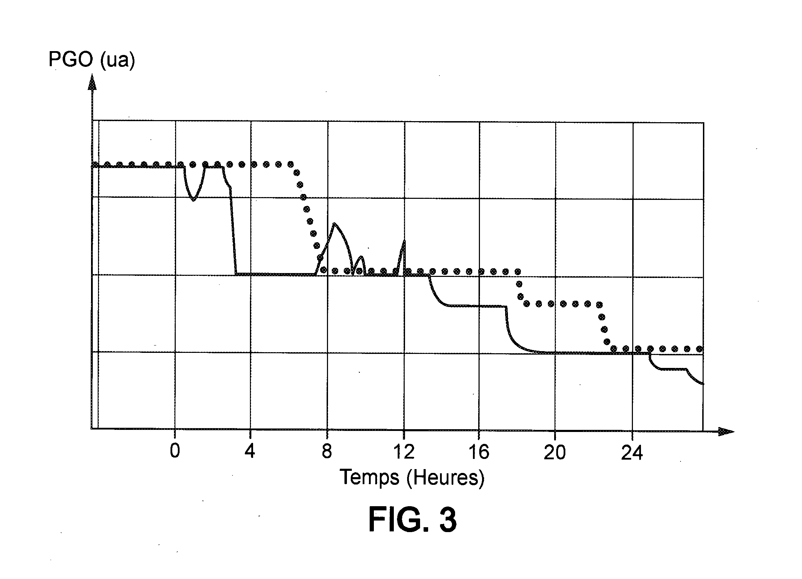

On comprendra alors que l'interface de planification 13, par post-traitement, permet notamment de « lisser » le fonctionnement de l'unité 15 en évitant des comportements erratiques, comme on le verra dans un exemple de réalisation décrit plus loin en référence à la figure 3.

Il s'agit donc d'un processus en boucle fermée (avec feedback), établissant itérativement une différence de points de fonctionnement par rapport à des consignes cibles à long terme.

Les avantages obtenus sont alors multiples.

Il est possible de calculer un point de marche optimum relativement à un point actuel et réel (sur retour de réponse ou « *feedback* » du procédé).

Le modèle, même s'il est imprécis initialement, peut être recadré, ses erreurs pouvant être estompées à terme, grâce au retour de réponse.

L'intervention du planificateur n'est pas soumise à un intervalle de temps fixe, comme au sens de US-A-7092893 prévoyant un intervalle de temps strict à respecter. En effet, la prise en compte d'un nouvel optimum n'est effective que si le procédé d'adaptation à une nouvelle consigne, par exemple pour un changement de charge, est dans un état stable. Typiquement, il est évité de déterminer un nouveau point de fonctionnement à atteindre si une perturbation extérieure en cours (mais passagère) est détectée (par exemple le changement de bouteilles d'épuration en tête, un changement de charge précédent non terminé, un procédé non encore stabilisé suite au dernier changement de charge effectué, ou encore un nouveau point de fonctionnement trop proche du point actuel). La liste des raisons n'est pas exhaustive mais représentative ici de différents cas possibles.

La planification (interfaces 11, 13) permet un comportement donc plus stable et évite des changements continus et intempestifs qui seraient liés par exemple à des variations de débits (tel que le débit de production d'oxygène gazeux), et ce notamment pour de simples raisons de contrôle de pureté.

La planification permet de minimiser l'intervalle de temps entre deux optimisations tout en ayant un retour de réponse de l'état en cours de l'unité de production sur le contrôle et/ou l'optimisation.

Avantageusement, il est possible aussi de définir des temps de marche minimums des équipements pour éviter des marches/arrêts intempestifs.

Le module de communication 10 peut comporter matériellement une interface de communication avec l'unité 15 pour recevoir par exemple des données de pressions dans un réseau de distribution (oxygène gazeux ou azote gazeux, par exemple), des niveaux de liquide (production d'oxygène liquide et/ou rajout de liquide dans la colonne dit « biberonnage »), ou autres, ainsi qu'une interface de communication avec le poste utilisateur 16 pour recevoir des précisions de contraintes ou de commandes. Le module de communication 10 peut en outre comporter un module informatique (ensemble de processeur et mémoire judicieusement programmée) exécutant des programmes informatiques (comportant des codes d'instructions à cet effet) par exemple pour mettre en forme ces données selon un protocole de communication choisi, pour transmettre ces données à l'interface de prétraitement 11. En référence à la figure 4, les instructions informatiques d'un tel module 10 peuvent être exécutées depuis un poste de contrôle PC1 relié à l'unité de production 15.

Typiquement, les interfaces de planification 11 et 13, comme le module d'optimisation 12, peuvent se présenter sous la forme de modules informatiques (ensembles de processeurs et mémoires judicieusement programmées) exécutant des programmes informatiques (comportant des codes d'instructions à cet effet). Les instructions informatiques des interfaces de planification 11 et 13 peuvent être exécutées par exemple depuis une unité informatique dite « SNCC » pour « Système numérique de contrôle de commandes ».

Les instructions informatiques du module d'optimisation 12 peuvent être exécutées quant à elles depuis un ordinateur personnel PC2 communiquant avec le système SNCC via une interface OPC (protocole de communication standard) ou tout autre type de protocole qui peut assurer le transfert correct de données. De même, le module de calcul des variables 14 peut être intégré au système SNCC.

Il s'agit bien entendu d'un exemple possible de réalisation. En variante, le module d'optimisation pourrait se trouver aussi dans un même système SNCC ou sur toute autre machine capable d'assurer de telles tâches.

Les instructions informatiques du module d'optimisation 12 et des interfaces de planification 11 et 13 en particulier peuvent se présenter, comme on le verra plus loin, par des instructions de calcul pour :
- tester des variables (par exemple en menant des comparaisons de valeurs de pressions et/ou de débits de fluides entre un état actuel de l'unité 15 et une prévision future de l'état de l'unité), et
- prendre des décisions sur la base de tels tests, en appliquant des règles métier (dont des exemples sont donnés ci-après).

En outre, l'optimisation globale est en « boucle fermée » (« feedback »), donc en mode relatif (ou « en dérivée »), dans le sens où un nouveau point de fonctionnement optimum est calculé relativement à l'état en cours de l'unité de production, pour décider si une modification ponctuelle de fonctionnement est nécessaire ou non.

On décrit ci-après à titre d'exemple une mise en oeuvre de ce qui précède dans la gestion des pressions des réseaux de distribution oxygène et azote (O₂ - N₂), ainsi que leurs productions liquides.

On considère plusieurs unités de production (production de gaz et de liquides), ainsi qu'un réseau de canalisations pour une distribution au consommateur final.

On cherche à déterminer la charge des unités (débit d'air, rajout de liquide ou « rajout de liquide » d'oxygène liquide et/ou d'azote liquide, charge du ou des liquéfacteur(s)) pour satisfaire les demandes, qui sont préférentiellement hiérarchisées, de la coordination centrale des réseaux, tout en satisfaisant un ensemble de contraintes. Ces demandes sont alors formulées par le module de communication 10.

Le module 10 peut formuler en effet des demandes générales, dans le cadre d'une coordination centrale, comme suit.

Des pressions sur les réseaux de distribution (azote et oxygène) sont souhaitées avec un horizon de temps de 24 heures, avec dans l'exemple décrit ici, deux points de consignes de pression par produit et par journée avec un objectif temporel indépendant.

Un programme établi pour l'arrêt et le démarrage d'un liquéfacteur (oxygène ou azote) doit être respecté sur une semaine.

Une production liquide d'oxygène et/ou d'azote est souhaitée.

Eventuellement, une puissance électrique maximale ne doit pas être dépassée. Parmi les contraintes particulières possibles, il doit être tenu compte :
- d'un nombre donné de compresseurs en service,
- des capacités des compresseurs en service (minimum et maximum),
- des capacités des pompes de rajout de liquide (minimum et maximum),
- des niveaux des stockages respectifs d'oxygène liquide et d'azote liquide,
- d'une zone interdite de fonctionnement, notamment en vue d'un rajout de liquide, alors que le liquéfacteur est en service (en définissant par exemple une limitation de la production du liquéfacteur par heure),
- en cas d'insuffisance de demande de production, d'un choix prédéterminé d'un compresseur à faire fonctionner en boucle fermée (avec recyclage de la sortie du compresseur vers son entrée) pour ne pas faire fonctionner le compresseur en-dessous d'un seuil critique, ce qui pourrait compromettre sa sécurité.

Les variables de commandes peuvent être du type :
- le débit d'air (via une ou plusieurs vannes de contrôle par exemple),
- un débit de rajout de liquide donné et le choix du type de rajout de liquide (pour l'oxygène liquide et/ou l'azote liquide), et
- une marche/arrêt du liquéfacteur avec une charge maximale et/ou minimale de ce dernier.

L'ensemble des demandes précitées peut être visualisé sur un écran d'interface tel que représenté sur la figure 2, ici sur un horizon d'une semaine. La demande de liquéfaction peut être définie par l'ensemble de commandes « CYCLE », par exemple en heures creuses « HC » ou en heures pleines « HP », avec des conditions de démarrage ou d'arrêt en fonction de seuils choisis. Les demandes en pression d'azote gazeux « NG » et d'oxygène gazeux « OG » dans les réseaux de distribution peuvent être suivies aussi. Il est possible également d'imposer une contrainte à respecter en priorité (« priorité sur limite ») : dans l'exemple représenté, le critère est le respect de la pression en oxygène OG. On peut aussi demander un rajout de liquide désiré (« BIB désiré »).

Ces demandes sont ensuite traitées par la première interface de planification 11 (prétraitement des données avant optimisation par le module 12), à la fois pour transformer certaines d'entre elles et de manière à réduire au maximum le nombre de variables du problème à optimiser.

Par exemple :
- les objectifs de pressions sont transformés en objectifs de production (d'oxygène gazeux ou d'azote gazeux) par un calcul préliminaire sur la base d'une pression actuelle, d'une pression à atteindre à un instant choisi, d'une injection actuelle d'air, ainsi que d'un gradient de pression observé sur le réseau de distribution,
- les objectifs sont sélectionnés en fonction des capacités minimum/maximum des compresseurs : par exemple, si l'objectif de production d'oxygène gazeux est inférieur au débit minimum des compresseurs d'oxygène, on sélectionne le débit minimum,
- les données de mesures sont filtrées (lissées) de manière à éviter une réaction instantanée,
- l'objectif de production liquide est activé ou désactivé suivant la demande spécifiée par le module de communication 10 : la désactivation revient à demander au module d'optimisation de minimiser la charge en air,
- les capacités de rajout de liquide et/ou de production liquide peuvent être limitées en fonction du niveau des stockages,
- les pénalités des contraintes, par exemple, peuvent être changées pour favoriser l'une des productions d'oxygène gazeux ou d'azote gazeux en fonction du choix du compresseur pour lequel on accepte un fonctionnement en boucle fermée (« recyclage » précité).

Ces variables transformées, ainsi que les contraintes sur les variables de commande et l'état réel de l'unité 15 et/ou d'optimisation déjà en cours, sont transférées au module d'optimisation 12.

La cadence de transfert des informations ainsi que le rythme de calcul du module d'optimisation peuvent être fixés arbitrairement. En tout état de cause, la mise en place des solutions obtenues, et de fait la cadence des décisions prises, est déterminée en particulier par la deuxième interface de planification 13.

En effet, cette dernière 13 a plusieurs fonctions. Plusieurs exemples en sont donnés ci-après.

Elle assure que les solutions calculées par le module d'optimisation 12 sont valides et peuvent être mises en service : si par exemple un changement de charge est déjà en cours ou qu'une perturbation du fonctionnement est susceptible d'apparaître (par exemple un changement de bouteilles d'épuration en tête, ou autres), ou que le fonctionnement défini ne serait pas suffisamment stable, ou encore que le nouveau point de fonctionnement n'est pas suffisamment éloigné du point actuel (en bande dite « morte »), les solutions sont ignorées. Elle peut imposer que le type de rajout de liquide soit changé si la solution décidée le nécessite et lancer le démarrage des équipements ad-hoc (typiquement une mise en froid des pompes).

Si la solution que fournit le module d'optimisation est dans une zone interdite, elle corrige cette solution vers la limite la plus proche.

Elle envoie les ordres de changement de points de fonctionnement aux différents systèmes gérant la charge de la partie cryostatique de l'unité 15 (ou « boîte froide ») et la charge du liquéfacteur.

Enfin, elle assure le bon déroulement des communications notamment entre le système SNCC et le module d'optimisation (par exemple, en arrêtant l'optimisation en temps réel et en déconnectant le module d'optimisation, en cas d'incident ou de perte de communication).

L'invention permet alors de gérer de manière optimale et hiérarchisée les demandes de la coordination centrale issues du module de communication 10. Indépendamment de la situation des réseaux de distribution, l'optimisation adapte au mieux ses variables de commandes et dans les contraintes spécifiées pour satisfaire les demandes tant en gaz qu'en liquides (en fixant par exemple une priorité au gaz) et tout en minimisant les mises à l'air.

L'objectif est d'atteindre une pression donnée à un moment donné (notion temporelle) tout en atteignant dans la mesure du possible l'objectif fixé de production liquide.

La figure 3 montre l'intérêt des interfaces de planification à deux niveaux permettant d'appliquer les solutions résultant du module d'optimisation en «boucle fermée », tout en conservant un comportement stable de l'unité de production. La courbe en trait plein représente les solutions données par l'optimisation à deux niveaux au sens de l'invention, tandis que la courbe en traits pointillés représente les solutions mises en forme et éventuellement filtrées par les interfaces de planification. On constate qu'en l'absence d'une telle planification à deux niveaux, et en particulier du filtrage par l'interface de post-traitement 13, la détermination d'une solution optimale issue seulement du module d'optimisation 12 (courbe en trait plein) présenterait un comportement erratique (montée et descente de charge très fréquente et inutile, voire dangereuse).

On a représenté sur la figure 5 une synthèse des étapes mises en oeuvre dans un exemple de réalisation au sens de l'invention. A l'étape 61, des paramètres propres au fonctionnement courant d'une unité de production 15 (tels que par exemple, des valeurs de pressions courantes en oxygène POG, en azote PNG, ou autres) sont obtenus de l'unité de production 15. A l'étape 62, des valeurs souhaitées de ces paramètres POG', PNG' sont déterminées en fonction de demandes du réseau de distribution planifiées (comme décrit ci-avant en référence à la figure 2), ou autres. A l'étape 63, des contraintes CTRT pour atteindre ces valeurs souhaitées sont rappelées. Il peut s'agir de données stockées préalablement en mémoire et chargées pour être communiquées à destination du module d'optimisation 12. Par exemple, si une liquéfaction d'oxygène est prévue dans les nouvelles valeurs de paramètres à l'étape 62, la contrainte sur un moment de fonctionnement des liquéfacteurs (heures creuses, par exemple) est chargée à l'étape 63.

Ces opérations sont mises en oeuvre par le module de communication 10 pour formuler alors une demande globale à l'étape 64 sous la forme d'un problème à faire résoudre par le module d'optimisation 12. A l'étape 65, l'interface de prétraitement 11 vérifie si une simplification de ce problème peut être menée et, le cas échéant, effectue cette simplification (lissage des données de mesure, corrections des consignes cibles dans des plages de valeurs prédéterminées, redéfinition de consignes cibles à long terme en consignes cibles à court terme, etc.).

Sur la base de la demande simplifiée à l'étape 65, une solution optimale est déterminée à l'étape 66, définissant une planification des tâches à accomplir pour atteindre un point de fonctionnement optimal. Par exemple, il peut s'agir de temporiser la production d'oxygène gazeux pendant les heures creuses pour favoriser la production d'oxygène liquide pendant ces heures si la priorité est accordée à l'économie d'énergie consommée et non à la production d'oxygène gazeux. Toutefois, pour une planification de tâches sur 24 heures, la quantité d'oxygène gazeux produite peut satisfaire la demande globale formulée à l'étape 64. Là encore, il ne s'agit que d'un exemple simple à but didactique, la production d'oxygène gazeux pouvant dépendre de nombreux autres paramètres. En réalité, plusieurs solutions peuvent être proposées à l'étape 66 et la plus valide est retenue à l'étape de test 67, par exemple sur le critère d'un fonctionnement le plus stable possible des différents équipements de l'unité 15, pour passer d'un point de fonctionnement courant A au nouveau point de fonctionnement B que propose l'optimisation menée à l'étape 66.

A l'étape 68, la solution optimisée (étape 66) et filtrée (étape 67) est interprétée pour définir des consignes correspondant à cette solution. Il peut s'agir d'un traitement de contrôle prédictif multi-variables (MVPC) pour mettre en forme des données de consignes en fonction de la solution optimale retenue. Ces données de consignes sont par exemple de nouvelles valeurs de débits imposées à l'unité de production 15 (étape 69) pour atteindre le nouveau point de fonctionnement B. On constatera à nouveau sur la figure 5 que le processus itératif est en boucle fermée.

Bien entendu, la présente invention ne se limite pas à la forme de réalisation décrite ci-avant à titre d'exemple ; elle s'applique à d'autres variantes.

Ainsi, l'architecture informatique représentée sur la figure 4 n'est présentée ci-avant qu'à titre d'exemple.

En outre, de façon générale, la production par séparation de l'air n'est décrite ci-avant qu'à titre d'exemple ; l'invention s'applique à la production d'au moins un fluide issu notamment d'un traitement de séparation de fluides (notamment de phases liquide/gazeuse ou de différents éléments dans un même fluide commun initial). L'invention s'applique plus généralement encore à la co-production de fluides, où le terme « fluide » a un sens large. Par exemple, l'énergie fluide que représente l'électricité peut être co-produite avec de l'eau en phase vapeur à haute pression dans un procédé dit de « cogénération » (par combustion d'un gaz). On comprendra alors que l'invention peut viser aussi une telle application de « cogénération » dès lors qu'une contrainte sur la production d'électricité entraîne nécessairement une contrainte sur la production de vapeur, ce qui doit faire intervenir une optimisation.

On relèvera en outre que l'invention ne se limite pas à l'optimisation du fonctionnement d'une unité de production pour accroître à son maximum la quantité de fluide(s) produite. Elle vise aussi à assurer la sécurité des conditions de fonctionnement d'une telle unité.

## Revendications

1. Procédé mis en oeuvre par des moyens informatiques, d'optimisation de la gestion d'une ou plusieurs unités de production d'au moins un fluide par co-production de fluides,
comportant :
a) une étape de collecte de données (10) :
∘ d'une ou plusieurs valeurs de paramètres courants définissant un point de fonctionnement courant de l'unité de production,
∘ d'une demande de production future,
∘ et d'au moins un critère d'optimisation,
b) et une étape de calcul (12) d'un ou plusieurs paramètres définissant un nouveau point de fonctionnement de l'unité, au moins en fonction de ladite demande, **caractérisé en ce que** l'étape de calcul b) comporte au moins :
b1) une estimation (12) d'au moins une solution optimale pour la définition du nouveau point de fonctionnement, et
b2) un test de validité (13) de ladite solution optimale, au moins en fonction d'une analyse de transition de l'unité de production depuis le point de fonctionnement courant jusqu'au nouveau point de fonctionnement.

2. Procédé selon la revendication 1, **caractérisé en ce que** le test de validité est mené en outre selon au moins un critère basé sur des règles métier de fonctionnement d'équipements que comporte l'unité.

3. Procédé selon l'une des revendications 1 et 2, **caractérisé en ce que** le test de validité est mené en outre selon au moins un critère basé sur une analyse d'un processus global de modification de fonctionnement de l'unité, en cours, avec une étude d'optimalité d'une modification du point de fonctionnement défini à l'étape b) en fonction dudit processus global.

4. Procédé selon l'une des revendications précédentes, **caractérisé en ce que** l'étape de collecte a) comporte en outre la collecte de données de contraintes (63) à respecter pour le calcul du ou des paramètres définissant le nouveau point de fonctionnement,
et **en ce que** l'estimation (12) de la solution optimale tient compte desdites contraintes.

5. Procédé selon l'une des revendications précédentes, **caractérisé en ce qu'**il comporte en outre un prétraitement (11) des données collectées à l'étape a) pour simplifier une formulation de ladite demande à traiter pendant l'opération d'estimation b1).

6. Procédé selon la revendication 5, **caractérisé en ce que** le prétraitement comporte au moins une planification d'une tâche à long terme en sous-tâches successives à court terme.

7. Procédé selon la revendication 6, **caractérisé en ce que** les étapes a) et b) sont appliquées répétitivement, et **en ce que** ladite tâche à long terme est menée par itérations successives d'applications des étapes a) et b) pour effectuer chacune desdites sous-tâches à court terme.

8. Procédé selon l'une des revendications 5 à 7, **caractérisé en ce que** ladite simplification comporte en outre un lissage de valeurs de mesures issues de l'unité de production et/ou un cadrage de valeurs dans des intervalles prédéterminés.

9. Procédé selon l'une des revendications précédentes, **caractérisé en ce qu'**il comporte :
b3) une mise en forme (14) d'un jeu de consignes de commande de l'unité, fonction de ladite solution optimale valide.

10. Procédé selon la revendication 9, **caractérisé en ce que** ladite mise en forme du jeu de consignes de commande applique un contrôle prédictif multi-variables.

11. Procédé selon l'une des revendications précédentes, **caractérisé en ce que** l'étape b2) fixe une cadence d'optimisation du fonctionnement de l'unité de production.

12. Programme informatique comportant des instructions pour la mise en oeuvre du procédé selon l'une des revendications 1 à 11, lorsque ce programme est exécuté par un processeur.

13. Dispositif comportant des moyens informatiques pour l'aide à l'optimisation de la gestion d'une ou plusieurs unités de production d'au moins un fluide par co-production de fluides, **caractérisé en ce qu'**il comporte au moins une interface de post-traitement (13) pour la mise en oeuvre de l'opération b2) du procédé selon l'une des revendications précédentes.

14. Dispositif selon la revendication 13, **caractérisé en ce qu'**il comporte en outre une interface de prétraitement (11) pour une simplification de formulation de ladite demande du procédé selon l'une des revendications 5 à 8.

15. Appareil de séparation par distillation d'au moins un fluide par co-production de fluides dont la gestion est optimisée par le procédé d'une des revendications 1 à 11.

## Patentansprüche

1. Verfahren zur Managementoptimierung durch Einsatz von Computermittels einer oder mehrerer Einheiten zur Produktion wenigstens eines Fluids durch Koproduktion von Fluiden,
das Folgendes aufweist:
a) einen Schritt zum Sammeln von Daten (10)
- eines oder mehrerer Werte aktueller Parameter, die einen aktuellen Betriebspunkt der Produktionseinheit definieren,
- einer künftigen Produktionsanforderung,
- und wenigstens eines Optimierungskriteriums,
b) und einen Schritt zum Berechnen (12) eines oder mehrerer Parameter, die einen neuen Betriebspunkt der Einheit definieren, wenigstens in Abhängigkeit von der Anforderung,
**dadurch gekennzeichnet, dass** der Schritt des Berechnens b) wenigstens Folgendes aufweist:
b1) eine Schätzung (12) wenigstens einer optimalen Lösung für die Bestimmung des neuen Betriebspunkts und
b2) einen Validitätstest (13) der optimalen Lösung, wenigstens in Abhängigkeit von einer Analyse des Übergangs der Produktionseinheit vom aktuellen Betriebspunkt zum neuen Betriebspunkt.

2. Verfahren nach Anspruch 1, **dadurch gekennzeichnet, dass** der Validitätstest ferner nach wenigstens einem Kriterium durchgeführt wird, das auf Geschäftsregeln für den Betrieb von Einrichtungen basiert, welche die Einheit aufweisen.

3. Vorrichtung nach einem der Ansprüche 1 und 2, **dadurch gekennzeichnet, dass** der Validitätstest ferner nach wenigstens einem Kriterium durchgeführt wird, das auf einer Analyse eines globalen Prozesses zur Änderung des laufenden Betriebs der Einheit basiert, mit einer Untersuchung der optimalen Änderung des in Schritt b) bestimmten Betriebspunkts in Abhängigkeit von dem globalen Prozess.

4. Verfahren nach einem der vorhergehenden Ansprüche, **dadurch gekennzeichnet, dass** der Schritt zum Sammeln a) ferner das Sammeln von Zwangsdaten (63) aufweist, die beim Berechnen des oder der Parameter, die den neuen Betriebspunkt bestimmen, einzuhalten sind,
und dass die Schätzung (12) der optimalen Lösung diese Zwänge berücksichtigt.

5. Verfahren nach einem der vorhergehenden Ansprüche, **dadurch gekennzeichnet, dass** es ferner eine Vorverarbeitung (11) der in Schritt a) gesammelten Daten aufweist, um eine Formulierung der Anforderung zu vereinfachen, die während des Schätzungsvorgangs b1) zu verarbeiten ist.

6. Verfahren nach Anspruch 5, **dadurch gekennzeichnet, dass** die Vorverarbeitung wenigstens eine Planung einer langfristigen Aufgabe in aufeinanderfolgende kurzfristige Teilaufgaben aufweist.

7. Verfahren nach Anspruch 6, **dadurch gekennzeichnet, dass** die Schritte a) und b) wiederholt angewendet werden und dass die langfristige Aufgabe durch aufeinanderfolgende Wiederholungen der Anwendungen der Schritte a) und b) durchgeführt wird, um jede der kurzfristigen Teilaufgaben durchzuführen.

8. Verfahren nach einem der Ansprüche 5 bis 7, **dadurch gekennzeichnet, dass** die Vereinfachung ferner eine Glättung von Messwerten, die von der Produktionseinheit stammen, und/oder eine Skalierung von Werten in vorgegebenen Intervallen aufweist.

9. Verfahren nach einem der vorhergehenden Ansprüche, **dadurch gekennzeichnet, dass** es Folgendes aufweist:
b3) ein Informbringen (14) eines Sollwertsatzes zur Steuerung der Einheit als Funktion der validen optimalen Lösung.

10. Verfahren nach Anspruch 9, **dadurch gekennzeichnet, dass** das Informbringen des Steuerungssollwertsatzes eine vorausschauende Mehrvariablenregelung anwendet.

11. Verfahren nach einem der vorhergehenden Ansprüche, **dadurch gekennzeichnet, dass** Schritt b2) den Takt der Optimierung des Betriebs der Produktionseinheit festlegt.

12. Computerprogramm, das Anweisungen für die Durchführung des Verfahrens nach einem der Ansprüche 1 bis 11 aufweist, wenn dieses Programm von einem Prozessor ausgeführt wird.

13. Vorrichtung mit Computermitteln zur Unterstützung bei der Optimierung des Managements einer oder mehrerer Einheiten zur Produktion wenigstens eines Fluids durch Koproduktion von Fluiden, **dadurch gekennzeichnet, dass** es ferner eine Nachverarbeitungsschnittstelle (13) zur Durchführung des Vorgangs b2) des Verfahrens nach einem der vorhergehenden Ansprüche aufweist.

14. Vorrichtung nach Anspruch 13, **dadurch gekennzeichnet, dass** sie ferner eine Vorverarbeitungsschnittstelle (11) für die Vereinfachung der Formulierung der Anforderung des Verfahrens nach einem der Ansprüche 5 bis 8 aufweist.

15. Apparat zur Trennung durch Destillation wenigstens eines Fluids durch Koproduktion von Fluiden, dessen Management durch das Verfahren nach einem der Ansprüche 1 bis 11 optimiert wird.

## Claims

1. Method implemented by computing means, for optimising the management of one or more units producing at least one fluid by co-production of fluids,
comprising:
a) a step of collecting data (10):
- of one or more current parameter values defining a current operating point of the production unit,
- a future production demand,
- and at least one optimisation criterion,
b) and a step of calculating (12) one or more parameters defining a new operating point of the unit, at least according to said demand,
**characterised in that** the calculation step b) comprises at least:
b1) an estimation (12) of at least one optimum solution for the definition of the new operating point, and
b2) a test of validity (13) of said optimum solution, at least on the basis of an analysis of transition of the production unit from the current operating point to the new operating point.

2. Method according to claim 1, **characterised in that** the validity test is further carried out according to at least one criterion based on trade rules for operating equipment of the unit.

3. Method according to either claim 1 or claim 2, **characterised in that** the validity test is further carried out according to at least one criterion based on an analysis of an overall process for modifying the operation of the unit which is in progress, including a study of the optimality of a modification of the operating point defined in the step b) according to said overall process.

4. Method according to any of the preceding claims, **characterised in that** the collection step a) further comprises the collection of constraint data (63) to be complied with for calculating the parameter or parameters defining the new operating point, and **in that** the estimation (12) of the optimum solution takes account of said constraints.

5. Method according to any of the preceding claims, **characterised in that** it further comprises a step of pre-processing (11) the data collected in step a) in order to simplify a formulation of said demand to be processed during the estimation operation b1).

6. Method according to claim 5, **characterised in that** the pre-processing step comprises at least one instance of scheduling of a long-term task as successive short-term sub-tasks.

7. Method according to claim 6, **characterised in that** steps a) and b) are applied repetitively, and **in that** said long-term task is conducted by successive iterations of applications of steps a) and b) to perform each of said short-term sub-tasks.

8. Method according to any of claims 5 to 7, **characterised in that** said simplification further comprises smoothing of measurement values obtained from the production unit and/or framing of values in predetermined intervals.

9. Method according to any of the preceding claims, **characterised in that** it comprises:
b3) formatting (14) a set of control setpoints of the unit depending on said valid optimum solution.

10. Method according to claim 9, **characterised in that** said formatting of the set of control setpoints applies a multi-variable predictive control.

11. Method according to any of the preceding claims, **characterised in that** step b2) sets a rate of optimisation of the operation of the production unit.

12. Computer program comprising instructions for implementing the method according to any of claims 1 to 11, when said program is executed by a processor.

13. Device comprising computer means for assisting in the optimisation of the management of one or more units producing at least one fluid by co-production of fluids, **characterised in that** the device comprises at least one post-processing interface (13) for implementing the operation b2) of the method according to any of the preceding claims.

14. Device according to claim 13, **characterised in that** it further comprises a pre-processing interface (11) for simplifying the formulation of said demand of the method according to any of claims 5 to 8.

15. Separation apparatus based on distillation of at least one fluid by co-production of fluids, the management of which is optimised by the method according to any of claims 1 to 11.
